# FASCICULE DE BREVET EUROPEEN

(11) **EP 0 375 002 B1**
(45) Date de publication et mention de la délivrance du brevet: **02.03.1994**
(21) Numéro de dépôt: 89203077.6
(22) Date de dépôt: 05.12.1989
(51) Int. Cl.: D01D 5/24, D01D 4/02, B01D 69/08

(54) **Filière pour la réalisation de membranes en un materiau organique comportant au moins un canal longitudinal**
Spinndüse zur Herstellung von Membranen aus einem organischen Material mit mindestens einem Längskanal
Spinneret for membrane manufacturing from organic material having at least one longitudinal channel

(30) Priorité: 22.12.1988 FR 8817372
(43) Date de publication de la demande: 27.06.1990
(73) Titulaire: LYONNAISE DES EAUX - DUMEZ, F-92000 Nanterre (FR)
(72) Inventeur: Bourdiol, Daniel, F-47480 Pont du Casse (FR); Saux, Franck, F-31270 Villeneuve-Tolosane (FR)
(74) Mandataire: Barre, Philippe

(56) Documents cités:
- EP-A- 0 277 619
- DE-B- 1 181 366
- DE-B- 1 279 888
- DE-C- 1 102 339
- US-A- 4 229 154
- PATENT ABSTRACTS OF JAPAN vo. 7, no. 28 (C-149)(1173), 4 Février 1983; & JP-A-57 183412 (TANAKA KIKINZOKU KOGYO K.K.) 11.11.82

## Description

L'invention concerne une filière pour la réalisation de membranes en un matériau organique comportant au moins un canal longitudinal. Elle s'applique notamment à des filières pour la réalisation de membranes comportant une pluralité de canaux longitudinaux séparés.

Il existe à l'heure actuelle de nombreuses filières pour la réalisation soit de fibres creuses, soit de membranes comportant une pluralité de canaux longitudinaux séparés. De telles filières sont notamment décrites dans les brevets US-A-3.081.490 et US-A-3.075.242, EP-A-0 277 619 (fibres creuses) et les brevets DE-A-3.022.313, CH-A-516.985 et US-A-2.965.925 (membranes dotées d'une pluralité de canaux) et comportent toutes au moins une aiguille à l'intérieur de laquelle on introduit un fluide de centrage, et un volume interstitiel autour de cette (ou de ces) aiguille(s) dans lequel s'écoule la solution polymérique. Bien que ces filières présentent chacune leurs propres qualités, elles ont toutes en commun plusieurs inconvénients. D'une part, elles sont toutes d'un prix de revient élevé soit en raison de la complexité de leurs éléments constitutifs, soit en raison du nombre élevé d'éléments nécessaires à leur fabrication. De plus, le temps de séjour des fluides à l'intérieur de ces filières est généralement long et il se produit des échanges de chaleur entre les fluides qui nuisent à la formation d'une structure particulière prédéfinie de la matière polymérique. Enfin, ces filières comportent des zones mortes qui rendent difficiles leur lavage et obligent généralement à les démonter en vue de ce lavage. Ces zones mortes constituent en outre des volumes dans lesquels peuvent se former des poches d'air lors de l'extrusion de la membrane.

La présente invention vise à pallier les inconvénients des filières connues et a pour premier objectif de fournir une filière réalisée à partir d'un nombre réduit de pièces possédant chacune une structure simple.

Un autre objectif de l'invention est de fournir une filière pouvant être lavée sans être démontée.

Un autre objectif est de fournir une filière dans laquelle le temps de séjour des fluides est le plus court possible.

Un autre objectif est de fournir une filière ne possédant aucune zone morte dans le sens d'écoulement des fluides.

A cet effet, l'invention concerne une filière pour la réalisation de membranes en un matériau organique comportant au moins un canal longitudinal, caractérisée en ce qu'elle comprend :
- un corps annulaire présentant un évidement de forme générale cylindrique et doté d'au moins un canal de fluide débouchant radialement dans ledit évidement,
- un embout supérieur comportant :
   . au moins un tronçon dit supérieur de section externe conjuguée de celle de l'évidement du corps, adaptée pour venir s'insérer en force dans ledit évidement,
   . au moins une aiguille creuse s'étendant dans le prolongement dudit embout,
   . un canal longitudinal d'alimentation en fluide de centrage traversant ledit embout et communiquant avec chaque aiguille,
- un embout inférieur de section externe conjuguée de l'évidement du corps, adaptée pour venir s'insérer en force dans ledit évidement, ledit embout inférieur présentant un alésage adapté pour délimiter autour des aiguilles une chambre d'extrusion de section conjuguée de celle de la membrane à réaliser,
- les embouts inférieur et supérieur étant en butée l'un contre l'autre par des faces en regard,
- chaque canal de fluide étant ménagé dans le corps annulaire de façon à déboucher au niveau des faces en regard des embouts inférieur et supérieur,
- un passage de fluide étant ménagé sur lesdites faces en regard, en continuité avec chacun des canaux de fluide pour communiquer avec la chambre d'extrusion.
- chaque canal de fluide et le passage de fluide en continuité avec ledit canal étant adaptés pour délimiter une section de passage de fluide décroissant dans le sens d'écoulement dudit fluide.

Le temps de séjour de la solution polymérique à l'intérieur de cette filière est donc extrêmement court car celle-ci est introduite pratiquement directement dans la chambre d'extrusion autour des aiguilles par l'intermédiaire des passages de fluide. Les échanges de chaleur entre solution polymérique et fluide de centrage étant réduits au minimum, cette filière permet de fabriquer des membranes dont la structure de la matière polymérique est bien définie.

De plus, cette filière est composée de trois pièces principales, voire quatre au maximum tel qu'on le verra plus loin, de structure simple pouvant, à partir de pièces brutes identiques, permettre la réalisation de filières différentes permettant notamment la fabrication de membranes possédant des répartitions et des nombres de canaux différents.

En outre, la section de passage de la matière polymérique est constamment décroissante dans le sens d'écoulement de cette dernière, ce qui va dans le sens d'une perte de charge croissante. De ce fait, cette filière ne comporte aucun espace mort susceptible d'engendrer la création d'une poche d'air. De plus, elle ne présente aucune zone inaccessible interdisant de la rincer correctement sans aucun démontage.

Pour ces raisons, le tronçon inférieur de l'embout supérieur peut présenter une section externe adaptée pour venir s'insérer en force dans l'évidement du corps annulaire. Ainsi, cet embout supérieur est indémontable, ce qui évite tout risque de tordre ou de casser les aiguilles lors d'une éventuelle opération de démontage.

De même, l'embout inférieur peut présenter, lui aussi, une section externe adaptée pour venir s'insérer en force dans l'évidement du corps annulaire. De ce fait, les deux embouts sont ainsi centrés parfaitement l'un par rapport à l'autre et ce montage ne nécessite ni joints d'étanchéité, ni pièces de fixations supplémentaires.

Par ailleurs, selon une autre caractéristique de l'invention, chaque passage de fluide ménagé sur les faces en regard des embouts inférieur et supérieur est constitué par une rainure ménagée dans la face d'un desdits embouts en continuité avec un canal de fluide du corps annulaire.

En outre, deux modes de réalisation préférentiels sont envisagés pour la réalisation des aiguilles. Ainsi, ces aiguilles peuvent, en premier lieu, être taillées dans la masse de l'embout supérieur. La filière peut également comprendre :
- un embout supérieur comportant au moins un alésage longitudinal traversant, débouchant dans le canal longitudinal d'alimentation en fluide de centrage,
- une aiguille logée dans chaque alésage de façon à comporter un tronçon, dit inférieur, s'étendant partiellement dans le prolongement de l'embout supérieur et une extrémité opposée, dite supérieure, débouchant dans le canal d'alimentation en fluide de centrage, ladite extrémité supérieure étant solidarisée par brasage ou collage dans ledit canal d'alimentation.

Enfin, cette filière peut être conçue pour la réalisation d'une fibre creuse et comporter une seule aiguille. Elle peut également permettre la réalisation de membranes dotées de plusieurs canaux longitudinaux séparés et comporter :
- soit plusieurs aiguilles alignées dans le prolongement de l'embout supérieur, et un embout inférieur doté d'un alésage de section rectangulaire délimitant autour desdites aiguilles une chambre d'extrusion de section rectangulaire de faible largeur par rapport à sa longueur,
- soit plusieurs aiguilles disposées concentriquement par rapport à l'axe longitudinal de ladite filière, et un embout inférieur doté d'un alésage de section circulaire délimitant autour desdites aiguilles une chambre d'extrusion de section cylindrique.

D'autres caractéristiques, buts et avantages de l'invention ressortiront de la description détaillée qui suit en référence aux dessins annexés qui en représentent à titre d'exemples non limitatifs trois modes de réalisation préférentiels. Sur ces dessins qui font partie intégrante de la présente description :
- la figure 1 est une coupe longitudinale par un plan A d'une filière conforme à l'invention pour la réalisation d'une membrane cylindrique comportant sept canaux séparés,
- la figure 2 est une vue de dessus de cette filière avec deux parties arrachées,
- la figure 3 est une coupe longitudinale par un plan B de l'embout inférieur de cette filière,
- la figure 4 est une vue de dessus de cet embout inférieur,
- la figure 5 est une coupe longitudinale par un plan C de l'embout supérieur de cette filière,
- la figure 6 est une coupe transversale par un plan D de cet embout supérieur,
- la figure 7 est une coupe longitudinale du corps annulaire de cette filière,
- la figure 8 est une coupe longitudinale par un plan E d'une filière conforme à l'invention pour la réalisation d'une membrane plane comportant sept canaux séparés,
- la figure 9 est une coupe longitudinale par un plan F de cette filière,
- la figure 10 est une vue de dessus de l'embout inférieur de cette filière,
- la figure 11 est une coupe longitudinale par un plan G de cet embout inférieur,
- la figure 12 en est une coupe longitudinale par un plan H,
- la figure 13 est une vue de dessous de l'embout supérieur de cette filière,
- la figure 14 est une coupe longitudinale par un plan J de cet embout supérieur,
- la figure 15 en est une coupe transversale partielle par un plan K,
- la figure 16 en est une coupe longitudinale par un plan L,
- la figure 17 est une coupe transversale par un plan M du corps annulaire de cette filière,
- la figure 18 est une coupe longitudinale par un plan brisé N de ce corps annulaire,
- la figure 19 est une coupe transversale par un plan O d'une filière conforme à l'invention pour la réalisation d'une membrane cylindrique comportant 19 canaux séparés,
- la figure 20 est une coupe longitudinale par un plan P de cette filière,
- la figure 21 en est une coupe longitudinale partielle par un plan R,
- la figure 22 est une coupe longitudinale par un plan brisé S de l'embout inférieur de cette filière,
- la figure 23 est une vue de dessus de cet embout inférieur,
- la figure 24 est une coupe longitudinale par un plan brisé T de l'embout supérieur de cette filière,
- la figure 25 est une vue de dessous de cet embout supérieur,
- la figure 26 est une coupe longitudinale partielle de la plaque intermédiaire de cette filière,
- la figure 27 est une vue de dessus à échelle agrandie de cette plaque intermédiaire,
- la figure 28 est une coupe longitudinale par un plan U du corps annulaire de cette filière,
- la figure 29 est une coupe transversale partielle par un plan X de ce corps annulaire.

Les filières représentées aux figures sont destinées à la fabricaton de membranes dotées d'une pluralité de canaux longitudinaux séparés. Elles comprennent principalement trois éléments : un corps annulaire 1 présentant un évidement 2 de forme générale cylindrique et deux embouts supérieur 3 et inférieur 4 insérés dans l'évidement 2 du corps annulaire 1 et étant en butée l'un contre l'autre par des faces en regard 3a, 4a.

Dans la description qui suit, les mêmes repères sont utilisés pour désigner des éléments équivalents des trois types de filières décrites.

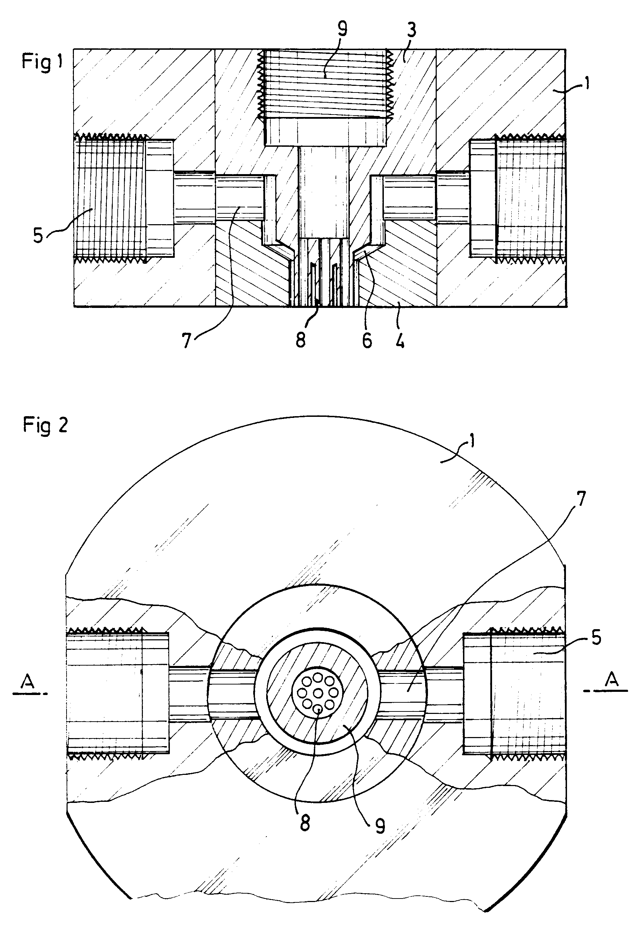

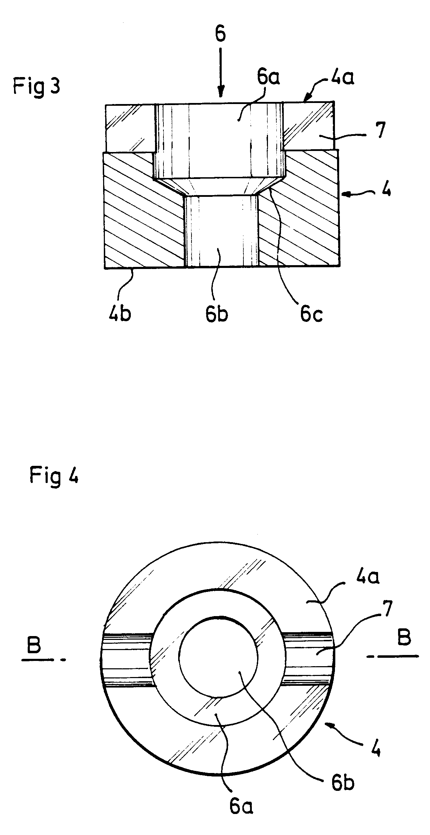

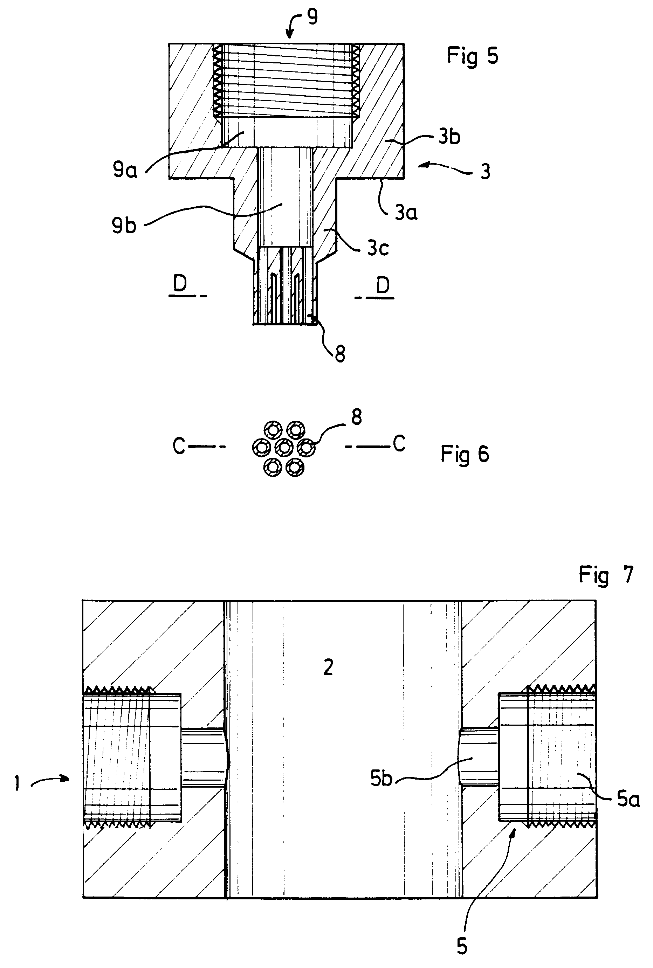

En premier lieu, la filière représentée aux figures 1 à 7 est destinée à la réalisation de membranes cylindriques dotées de sept canaux longitudinaux séparés.

Le corps annulaire 1 de cette filière présente une forme externe générale cylindrique et comporte un évidement central longitudinal 2, lui-même de forme cylindrique.

En outre, deux conduits de fluide 5 diamétralement opposés sont ménagés radialement dans la paroi de ce corps annulaire 1, de façon à déboucher dans l'évidement 2. Ces conduits 5 comportent une première portion 5a taraudée débouchant au niveau de la paroi périphérique du corps 1 et adapté pour permettre le raccordement de canalisations d'amenée de fluide présentant un embout fileté conjugué, et une deuxième portion 5b de section inférieure débouchant dans l'évidement 2.

L'embout inférieur 4 présente également une forme externe cylindrique conjuguée de celle de l'évidement 2 du corps annulaire 1 pour venir s'insérer en force dans ce dernier.

Cet embout inférieur 4 comporte un alésage longitudinal 6 doté d'un épaulement chanfreiné 6c le divisant en deux alésages de diamètres différents : un alésage supérieur 6a de diamètre supérieur débouchant au niveau de la face d'assemblage 4a de l'embout 4, et un alésage inférieur 6b de diamètre conjugué de celui de la membrane à réaliser, débouchant au niveau de la face inférieure de cet embout 4.

En dernier lieu, la face d'assemblage 4a de l'embout 4 comporte deux rainures radiales alignées 7 débouchant respectivement dans le tronçon supérieur 6a de l'alésage 6 et au niveau de la paroi périphérique de cet embout. Ces rainures 7 sont agencées pour venir en continuité avec les tronçons 5b des conduits de fluide 5 du corps annulaire 1 lorsque l'embout inférieur 4 est inséré dans l'évidement 2 de ce corps 1.

L'embout supérieur 3 comporte quant à lui un tronçon supérieur 3b de forme externe cylindrique adaptée pour venir s'insérer en force dans l'évidement 2 du corps annulaire 1. Ce tronçon supérieur 3b présente une face inférieure d'assemblage 3a venant en butée sur la face d'assemblage 4a de l'embout inférieur 4.

Dans le prolongement de ce tronçon supérieur 3b s'étend un tronçon inférieur 3c de forme conjuguée de l'alésage 6 de l'embout inférieur 4, adaptée pour délimiter avec la paroi interne de cet alésage 6 un passage annulaire de fluide communiquant avec les rainures 7.

L'extrémité inférieure de ce tronçon 3c s'étendant dans l'alésage inférieur 6b de l'embout inférieur est en outre taillée dans la masse de façon à se présenter sous la forme de sept aiguilles 8 disposées concentriquement et séparées par un volume interstitiel communiquant avec le passage annulaire de fluide.

En dernier lieu, l'embout supérieur comporte un canal longitudinal 9 d'alimentation des aiguilles 8 en un fluide de centrage. Ce canal 9 comporte deux portions de diamètres différents séparées par un épaulement : une portion supérieure 9a taraudée débouchant ou niveau de la face supérieure de l'embout supérieur 3 et adaptée pour permettre le raccordement d'une canalisation d'amenée de fluide de centrage dotée d'un embout fileté conjugué, et une portion inférieure 9b de diamètre inférieur communiquant avec les aiguilles 8.

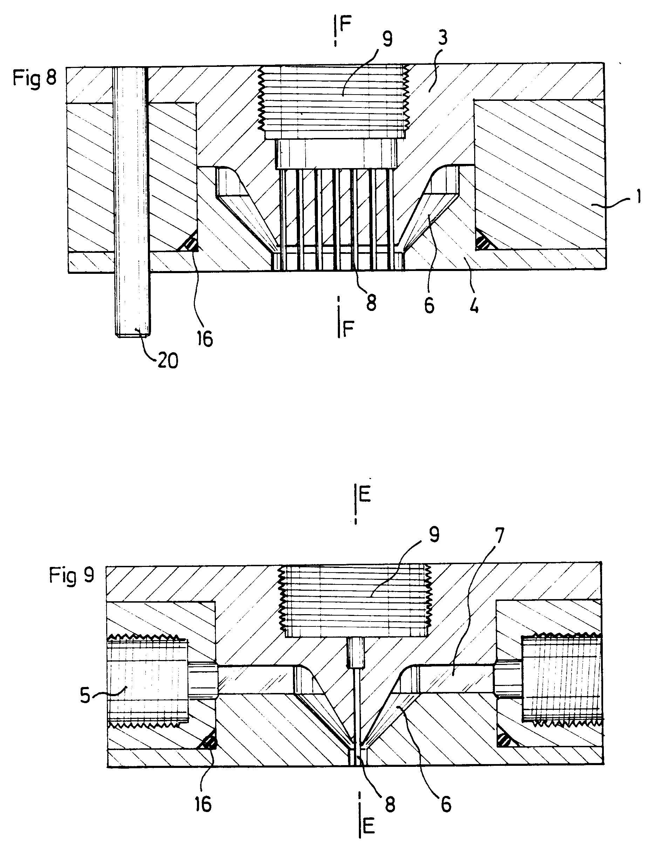

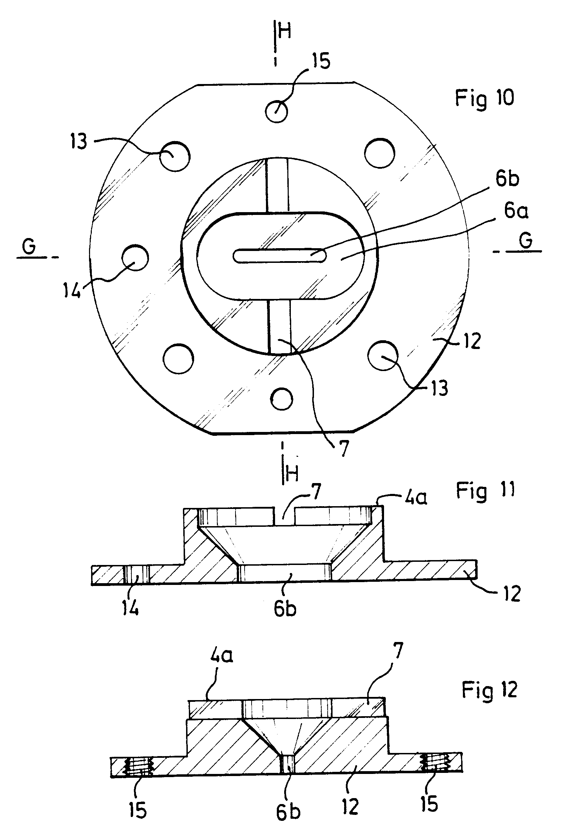

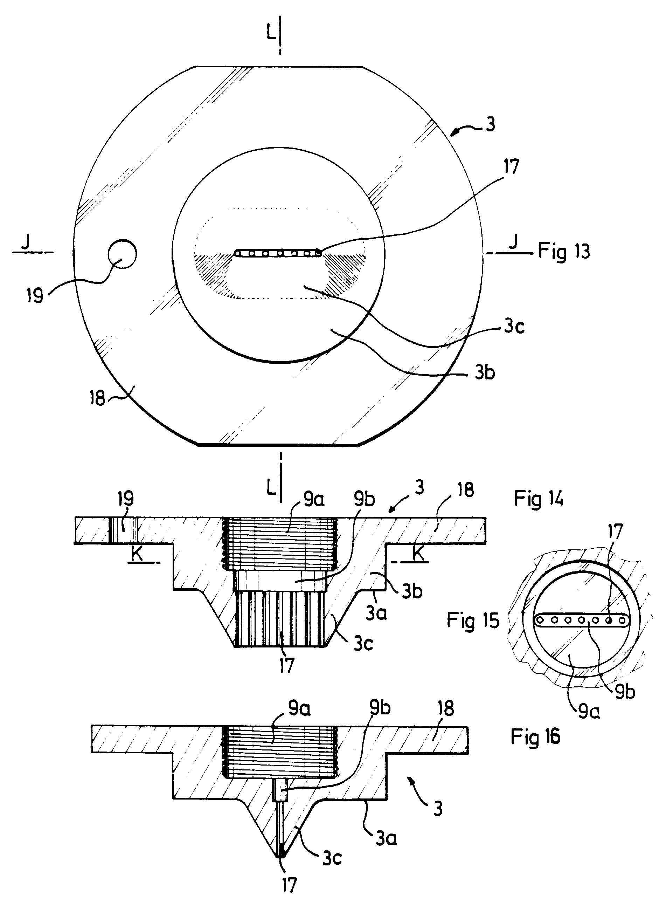

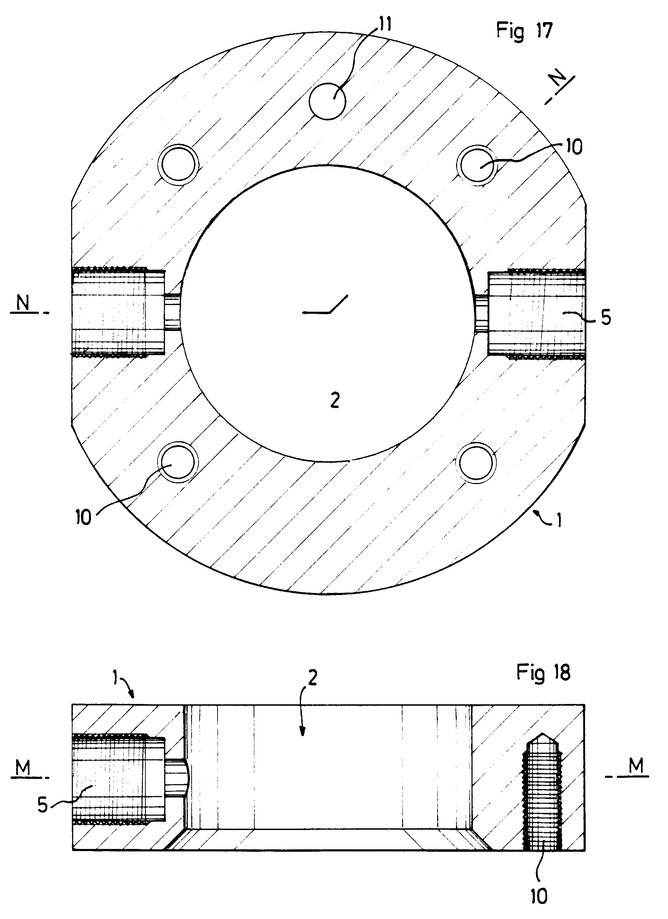

La filière représentée aux figures 8 à 18 est quant à elle destinée à la réalisation de membranes planes dotées de sept canaux longitudinaux alignés et séparés.

Le corps 1 de cette filière est également de forme générale cylindrique et comporte deux conduits de fluide 5 radiaux débouchant dans un évidement 2. Cet évidement cylindrique 2 présente quant à lui un tronçon d'extrémité inférieur chanfreiné.

En outre, la paroi de ce corps 1 est dotée de quatre percements longitudinaux borgnes 10 taraudés et d'un percement traversant 11.

L'embout inférieur 4 comporte également une forme externe générale cylindrique conjuguée de celle de l'évidement 2 du corps 1 pour venir s'insérer en force dans ce dernier. Cet embout inférieur comporte en outre une paroi frontale 12 se présentant sous la forme d'un plateau adapté pour venir se plaquer contre la face inférieure du corps 1.

Cette paroi frontale 12 est dotée de quatre percements 13 conjugués des percements taraudés 10 du corps 1 en vue de l'assemblage de ces deux pièces au moyen de vis de fixation, et d'un percement 14 en regard du percement traversant 11 de ce corps. En outre, elle comporte deux percements taraudés 15 destinés à permettre de l'extraire au moyen d'un outil doté d'un filetage conjugué.

Par ailleurs, tel que représenté aux figures 8 et 9, un joint annulaire 16 logé dans l'extrémité chanfreinée de l'alésage 2 du corps 1 assure l'étanchéité entre ce corps 1 et l'embout inférieur 4.

Cet embout inférieur 4 comprend, d'autre part, un alésage longitudinal 6 débouchant au niveau de sa face d'assemblage 4a et présentant la forme d'un tronc de pyramide 6a de section décroissante vers le bas débouchant au niveau de la face inférieure de l'embout par un alésage de section sensiblement rectangulaire 6b.

En dernier lieu, la face d'assemblage 4a de cet embout inférieur 4 comporte deux rainures radiales alignées 7 communiquant avec l'alésage 6 et agencées pour venir en continuité avec les conduits de fluide 5 du corps annulaire.

L'embout supérieur 3 comporte quant à lui un tronçon supérieur 3b de forme externe cylindrique adapté pour venir s'insérer en force dans l'évidement 2 du corps annulaire 1. Ce tronçon supérieur 3b présente une face inférieure d'assemblage 3a venant en butée sur la face d'assemblage 4a de l'embout inférieur 4.

Dans le prolongement de ce tronçon supérieur 3b s'étend un tronçon inférieur 3c de forme conjuguée de l'alésage 6 de l'embout inférieur 4, adaptée pour délimiter avec la paroi interne de cet alésage 6 un passage annulaire de fluide communiquant avec les rainures 7.

L'extrémité inférieure de ce tronçon 3c est en outre percée d'alésages longitudinaux 17, au nombre de sept, dans chacun desquels est logée une aiguille 8 agencée pour s'étendre partiellement dans le prolongement de l'embout supérieur 3 de façon à déterminer un volume interstitiel communiquant avec le passage annulaire de fluide, au niveau de l'alésage de section rectangulaire 6b de l'embout inférieur 4. Chacune de ces aiguilles 8 est fixée par brasage ou soudage.

L'embout supérieur 3 comporte par ailleurs un canal longitudinal 9 d'alimentation des aiguilles 8 en un fluide de centrage. Ce canal 9 comporte deux portions de diamètres différents séparées par un épaulement : une portion supérieure 9a taraudée débouchant au niveau de la face supérieure de l'embout supérieur 3 et adaptée pour permettre le raccordement d'une canalisation d'amenée de fluide de centrage dotée d'un embout fileté conjugué, et une portion inférieure 9b de section rectangulaire communiquant avec les aiguilles 8.

En dernier lieu, cet embout supérieur 3 comporte une face frontale 18 adaptée pour venir se plaquer sur la face supérieure du corps 1. Cette face frontale 18 présente un percement 19 adapté pour se positionner en regard des percements respectifs 11 et 14 du corps annulaire 1 et de l'embout inférieur 4 de façon à permettre d'indexer la position de ces trois pièces au moyen d'un pion de centrage 20.

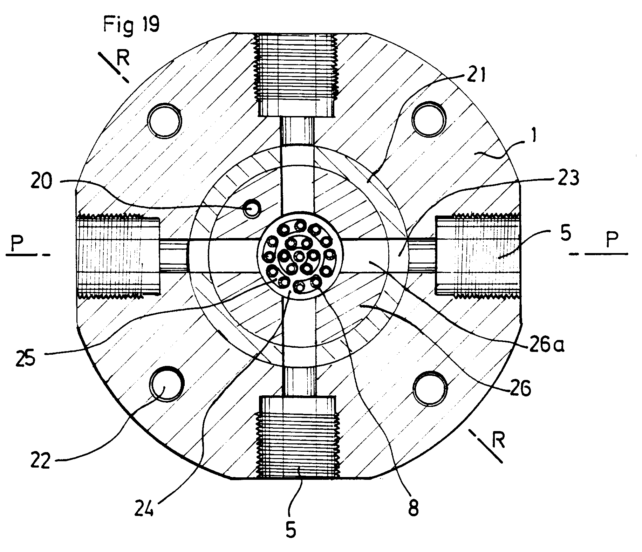

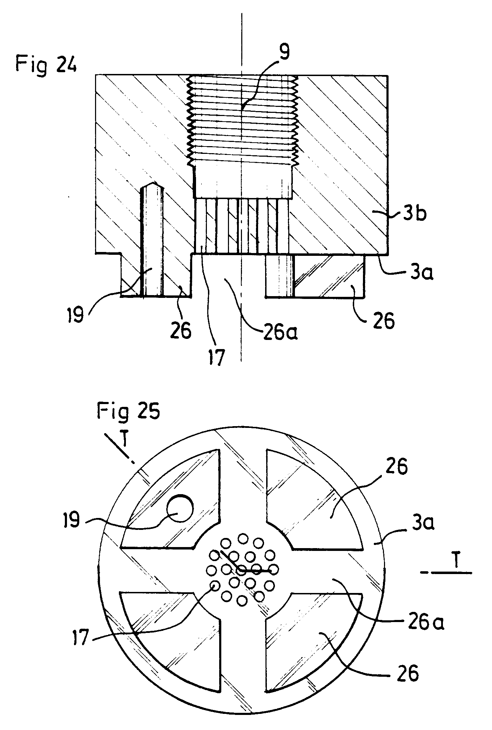

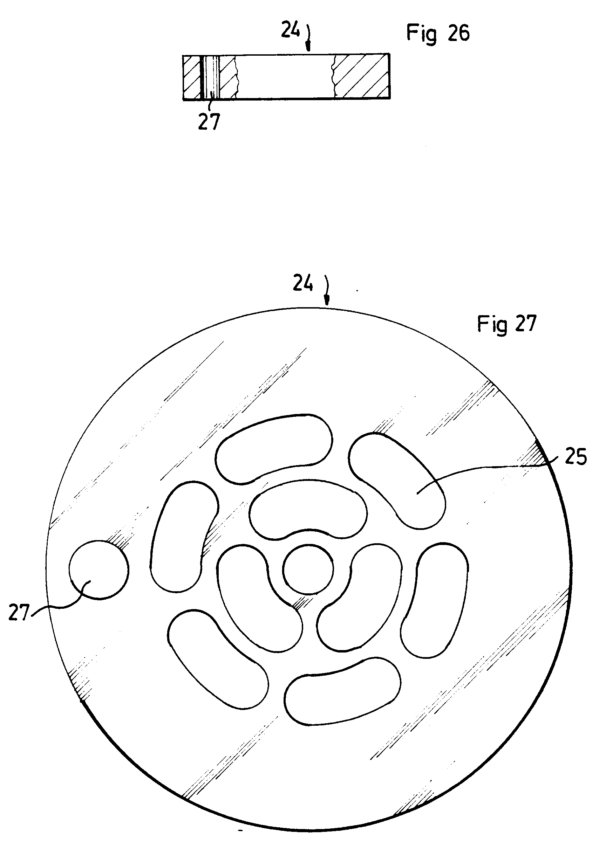

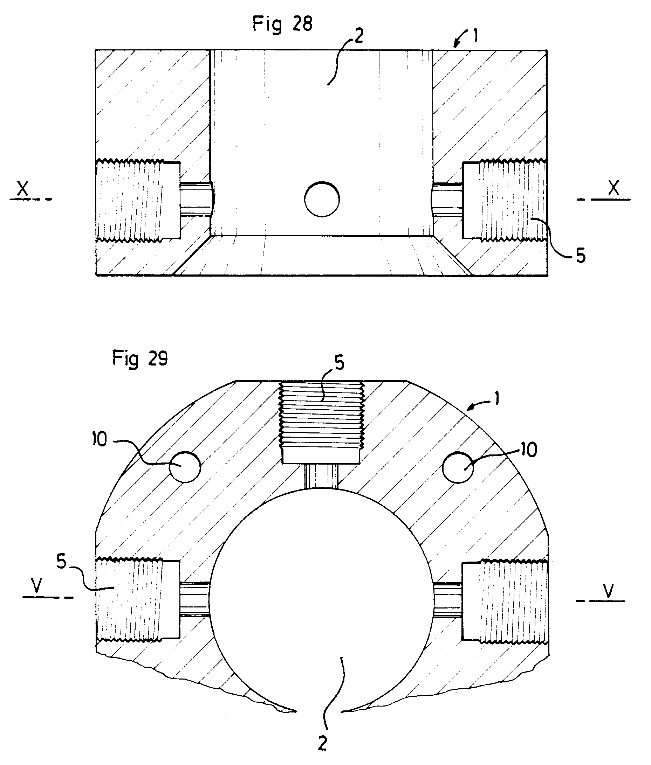

Enfin, la filière représentée aux figures 19 à 29 est destinée à la réalisation de membranes cylindriques dotées de dix-neuf canaux longitudinaux séparés.

Le corps 1 de cette filière est de forme externe cylindrique et comporte quatre conduits de fluide radiaux 5 débouchant dans un évidement 2. Cet évidement cylindrique 2 présente un tronçon d'extrémité inférieur chanfreiné.

En outre, la paroi de ce corps 1 est dotée de quatre percements longitudinaux borgnes 10 taraudés.

L'embout inférieur 4 présente la forme d'un manchon comportant une paroi périphérique cylindrique 21 conjuguée de l'évidement 2 du corps 1 pour venir s'insérer en force dans ce dernier. Cet embout inférieur comporte en outre une paroi frontale 12 se présentant sous la forme d'un plateau adapté pour venir se plaquer contre la face inférieure du corps 1.

Cette paroi frontale 12 est dotée de quatre percements 13 conjugués des percements taraudés 10 du corps en vue de l'assemblage de ces deux pièces au moyen de vis de fixation 22, et d'un percement 14.

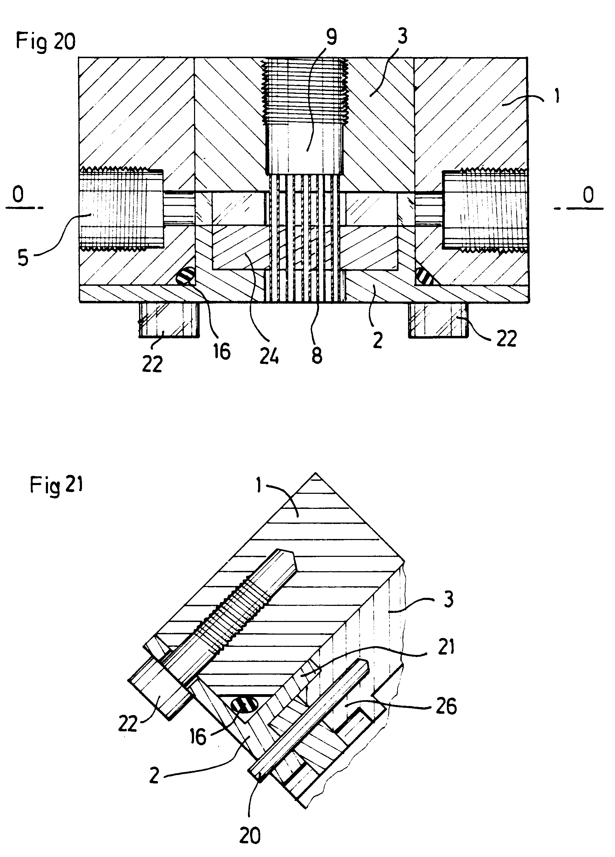

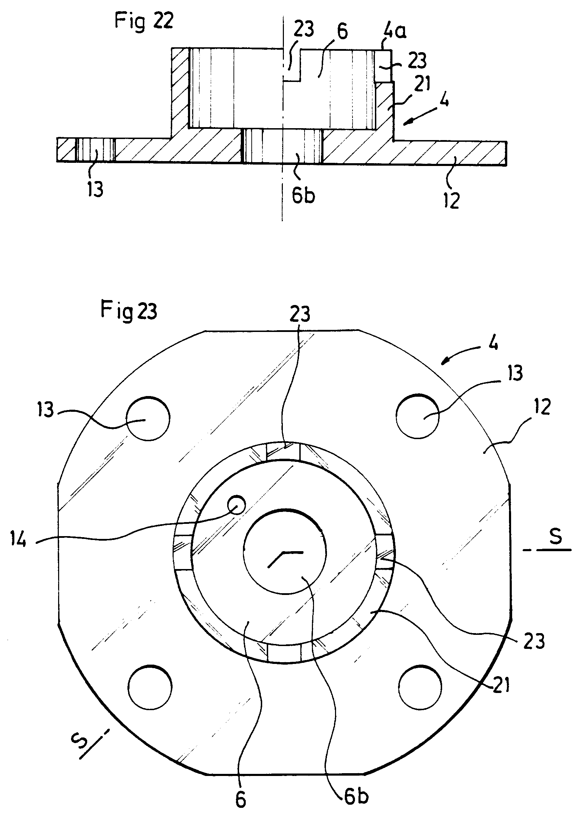

Par ailleurs, tel que représenté aux figures 20 et 21, un joint annulaire 16 logé dans l'extrémité chanfreinée de l'alésage 2 du corps 1 assure l'étanchéité entre ce corps 1 et l'embout inférieur 4.

Cet embout inférieur 4 comprend, d'autre part, un alésage longitudinal 6 délimité par la paroi périphérique annulaire 21 et débouchant ou niveau de la face frontale 12 de l'embout par un alésage 6b cylindrique de diamètre conjugué de celui de la membrane à réaliser.

En dernier lieu, le chant supérieur de la paroi périphérique 21 fait office de face d'assemblage 4a et comporte quatre échancrures 23 déterminant des passages de fluide venant en continuité avec les conduits de fluide 5 du corps annulaire 1.

A l'intérieur de l'alésage 6 se trouve disposée une plaque intermédiaire 24 de diamètre conjugué de cet alésage et comportant en regard de l'alésage inférieur 6b une pluralité de passages de fluide 25 disposés concentriquement et présentant une forme arrondie allongée. Chacun de ces passages de fluide 25 est destiné à loger deux aiguilles 8 et à déterminer autour de celles-ci un volume interstitiel.

L'embout supérieur 3 comporte quant à lui un tronçon supérieur 3b de forme cylindrique adaptée pour venir s'insérer en force dans l'évidement 2 du corps annulaire 1. Ce tronçon supérieur 3 comporte une face d'assemblage 3a venant en butée sur le chant supérieur de la paroi périphérique 21 de l'embout inférieur.

Cet embout supérieur 3 comporte, en outre, quatre plots 26, en saillie sous sa face d'assemblage 3a. Ces plots 26 présentent la forme de secteurs de cercle et sont disposés de façon à délimiter entre eux des passages de fluide 26a venant en continuité avec les échancrures 23 de la paroi périphérique 21 de façon à conduire ce fluide vers une zone centrale de section circulaire conjuguée de celle de l'alésage 6b de l'embout inférieur 4.

L'embout supérieur 3 est par ailleurs percé d'alésages longitudinaux 17, au nombre de dix-neuf, ménagés de façon à déboucher au niveau de la face d'assemblage 3a, dans la zone centrale précitée. Chacun de ces alésages 17 est adapté pour loger une aiguille 8 agencée pour s'étendre partiellement dans le prolongement de l'embout supérieur 3, de façon à traverser un passage de fluide 25 de la plaque intermédiaire 24 et s'étendre dans l'alésage 6b de l'embout inférieur 4. La fixation de ces aiguilles 8 est obtenue par brasage ou soudage.

L'ensemble des aiguilles 8 détermine ainsi dans cet alésage 6b un volume insterstitiel communiquant avec les conduits de fluide 5 du corps annulaire 1 par l'intermédiaire des passages de fluide 25 de la plaque intermédiaire 24.

L'embout supérieur 3 comporte d'autre part un canal longitudinal 9 d'alimentation en fluide de centrage. Ce canal 9 est taraudé pour le raccordement de canalisations d'amenée de fluide de centrage et communique avec les aiguilles 8.

En dernier lieu, cet embout supérieur 3 comporte un percement borgne 19 agencé pour se positionner en regard du percement 14 de l'embout inférieur 4 de façon à permettre d'indexer la position de ces pièces au moyen d'un pion d'indexage 20 logé dans lesdits percements 14, 19 et traversant un troisième percement 27 ménagé dans la plaque intermédiaire 24.

Le fonctionnement de ces trois filières est identique. Le fluide de centrage est amené dans le canal d'alimentation 9 de l'embout supérieur 3 au moyen d'une canalisation raccordée sur cet embout, et s'écoule donc à l'intérieur des aiguilles.

La solution polymérique est quant à elle introduite dans les conduits de fluide 5 au moyen de canalisations raccordées sur le corps annulaire 1 et s'écoule dans les passages de fluide ménagés entre les faces d'assemblage 3a, 4a des embouts inférieur 4 et supérieur 3 jusque dans l'alésage 6b où elle est répartie autour des aiguilles 8.

Il est à noter toutefois que la filière pour la réalisation de membranes comportant dix-neuf canaux comporte une plaque intermédiaire 24 divisant l'alésage 6 de l'embout inférieur en deux compartiments : un compartiment amont dans lequel débouchent les passages de fluide, et un compartiment aval correspondant à l'alésage 6b et constituant la chambre de sortie de l'extrudat.

Le rôle de cette plaque 24, utilisée pour des filières comportant un nombre important d'aiguilles 8, est de créer une perte de charge ajustable selon l'épaisseur de la plaque, permettant d'assurer une répartition homogène de la solution polymérique autour des aiguilles 8.

## Revendications

1. Filière pour la réalisation de membranes en un matériau organique comportant au moins un canal longitudinal, caractérisée en ce qu'elle comprend :
- un corps annulaire (1) présentant un évidement (2) de forme générale cylindrique et doté d'au moins un canal de fluide (5) débouchant radialement dans ledit évidement,
- un embout supérieur (3) comportant :
. au moins un tronçon dit supérieur (3b) de section externe conjuguée de celle de l'évidement (2) du corps (1), adaptée pour venir s'insérer en force dans ledit évidement,
. au moins une aiguille creuse (8) s'étendant dans le prolongement dudit embout,
. un canal longitudinal (9) d'alimentation en fluide de centrage traversant ledit embout (3) et communiquant avec chaque aiguille (8),
- un embout inférieur (4) de section externe conjuguée de l'évidement (2) du corps (1), adaptée pour venir s'insérer en force dans ledit évidement, ledit embout inférieur présentant un alésage (6) adapté pour délimiter autour des aiguilles (8) une chambre d'extrusion (6b) de section conjuguée de celle de la membrane à réaliser,
- les embouts inférieur (4) et supérieur (3) étant en butée l'un contre l'autre par des faces en regard (4a, 3a),
- chaque canal de fluide (5) étant ménagé dans le corps annulaire (1) de façon à déboucher au niveau des faces en regard (3a, 4a) des embouts inférieur (4) et supérieur (3),
- un passage de fluide (7 ; 23, 26a) étant ménagé sur lesdites faces en regard, en continuité avec chacun des canaux de fluide (5), pour communiquer avec la chambre d'extrusion (6b).
- chaque canal de fluide (5) et le passage de fluide (7 ; 23, 26a) en continuité avec ledit canal étant adaptes pour délimiter une section de passage de fluide décroissant dans le sens d'écoulement dudit fluide.

2. Filière selon la revendication 1, caractérisée en ce qu'elle comprend des moyens, notamment au moins un pion (20), adaptés pour indexer la position relative des embouts inférieur (4) et supérieur (3) à l'intérieur de l'évidement (2) du corps annulaire (1).

3. Filière selon l'une des revendications 1 ou 2, caractérisée en ce qu'elle comprend :
- un embout supérieur (3) comportant au moins un alésage longitudinal (17) traversant, débouchant dans le canal longitudinal (9) d'alimentation en fluide de centrage,
- une aiguille (8) logée dans chaque alésage (17) de façon à comporter un tronçon, dit inférieur, s'étendant partiellement dans le prolongement de l'embout supérieur (3) et une extrémité opposée, dite supérieure, débouchant dans le canal (9) d'alimentation en fluide de centrage, ladite extrémité supérieure étant solidarisée par brasage ou collage dans ledit canal d'alimentation.

4. Filière selon l'une des revendications 1 à 3, caractérisée en ce que chaque aiguille (8) est taillée dans la mase de l'embout supérieur (3).

5. Filière selon l'une des revendications précédentes, caractérisée en ce que le canal d'alimentation (9) en fluide de centrage de l'embout supérieur (3) et chaque canal de fluide (5) ménagé dans le corps annulaire (1) comportent des extrémités taraudées pour le raccordement de canalisations d'amenées de fluide présentant un embout fileté conjugué.

6. Filière selon l'une des revendications précédentes, caractérisée en ce que chaque passage de fluide ménagé sur les faces en regard des embouts inférieur (4) et supérieur (3) est constitué par une rainure (7) ménagée dans la face d'un desdits embouts en continuité avec un canal de fluide (5) du corps annulaire (1).

7. Filière selon l'une des revendications précédentes, comportant plusieurs aiguilles (8) alignées dans le prolongement de l'embout supérieur (3), et un embout inférieur (4) doté d'un alésage (6b) de section rectangulaire délimitant autour desdites aiguilles une chambre d'extrusion de section rectangulaire de faible largeur par rapport à sa longueur.

8. Filière selon l'une des revendications 1 à 6, comportant plusieurs aiguilles (8) disposées concentriquement par rapport à l'axe longitudinal de ladite filière, et un embout inférieur (4) doté d'un alésage (6b) de section circulaire délimitant autour desdites aiguilles une chambre d'extrusion de section cylindrique.

9. Filière selon la revendication 8, caractérisée en ce qu'elle comprend une plaque intermédiaire (24) disposée dans l'alésage (6) de l'embout inférieur (4) de façon à diviser ce dernier en deux compartiments : un compartiment amont dans lequel débouche chaque canal de fluide (5) et un compartiment aval (6b) constituant la chambre de sortie de l'extrudat, ladite plaque intermédiaire étant dotée d'une pluralité de passages (25) ménagés de façon à permettre le passage du fluide vers le volume interstitiel du compartiment aval autour des aiguilles (8).

10. Filière selon la revendication 9, caractérisée en ce que les passages de fluide (25) de la plaque intermédiaire (24) présentent une forme arrondie allongée et logent chacun deux aiguilles.

## Claims

1. Spinneret for manufacturing membranes from an organic material, said spinneret having at least one longitudinal channel and characterised in that it comprises :
- an annular body (1) with a cavity (2) of generally cylindrical shape and endowed with at least one fluid channel (5) opening out radially into said cavity,
- an upper socket (3) having
. at least one section, the so-called upper section (3b), the outer cross-section of which matches that of cavity (2) of body (1) and is suitable for insertion by pressure into said cavity,
. at least one hollow needle (8) extending in prolongation of said socket,
. a longitudinal channel (9) for the supply of centring fluid, whereby said longitudinal channel passes through said socket (3) and communicates with each needle (8),
- a lower socket (4) with an outer cross-section matching cavity (2) of body (1) and suitable for insertion by pressure into said cavity, said lower socket having a bore (6) so designed as to delimit about needles (8) an extrusion chamber (6b) with a cross-section matching that of the membrane to be produced,
- lower socket (4) and upper socket (3) abutting one another by means of opposite faces (4a, 3a),
- each fluid channel (5) being provided in annular body (1) in such a way as to open out at the level of opposite faces (3a, 4a) of lower socket (4) and upper socket (3),
- a fluid duct (7; 23, 26a) being provided in said opposite faces, in alignment with each of fluid channels (5) so as to communicate with extrusion chamber (6b),
- each fluid channel (5) and fluid duct (7; 23, 26a) in alignment with said channel being so designed as to delimit a fluid duct cross-section becoming smaller in the direction of flow of said fluid.

2. Spinneret according to Claim 1, characterised in that it comprises means, in particular at least one pin (20), designed for indexing the relative position of lower socket (4) and upper socket (3) in relation to the inside of cavity (2) of annular body (1).

3. Spinneret according to one of Claims 1 or 2, characterised in that it comprises :
- an upper socket (3) with at least one longitudinal through-bore (17), opening out into longitudinal channel (9) for the supply of centring fluid,
- a needle (8) located within each bore (17) in such a way as to comprise a section, the so-called lower section, partly extending in prolongation of upper socket (3) and an opposite end, the so-called upper section, opening out into channel (9) for the supply of centring fluid, said upper end being secured in said supply channel by braizing or by application of an adhesive.

4. Spinneret according to one of Claims 1 to 3, characterised in that each needle (8) is cut within the mass of upper socket (3).

5. Spinneret according to one of the preceding claims, characterised in that channel (9) for the supply of centring fluid of upper socket (3) and each fluid channel (5) formed in annular body (1) comprise threaded ends for connecting fluid supply ducts having a matching threaded outlet.

6. Spinneret according to one of the preceding claims, characterised in that each fluid duct formed in the opposite faces of lower socket (4) and upper socket (3) consists of a groove (7) formed in the face of one of said sockets in alignment with a fluid channel (5) of annular body (1).

7. Spinneret according to one of the preceding claims comprising several needles (8) arranged in a row in prolongation of upper socket (3) and a lower socket (4) endowed with a bore (6b) of rectangular cross-section delimiting about said needles an extrusion chamber of rectangular cross-section, the width of which is small in relation to its length.

8. Spinneret according to one of Claims 1 to 6 comprising several needles (8) arranged concentrically in relation to the longitudinal axis of said spinneret and a lower socket (4) endowed with a bore hole (6b) of circular cross-section delimiting about said needles an extrusion chamber of cylindrical cross-section.

9. Spinneret according to Claim 8, characterised in that it comprises an intermediate plate (24) arranged in bore hole (6) of lower socket (4) so as to divide the latter into two compartments, i.e. an upstream compartment into which each fluid channel (5) opens and a downstream compartment (6b) which constitutes the extrudate discharge chamber, said intermediate plate being endowed with a plurality of passages (25) formed in such a way as to enable the flow of fluid towards the interstitial space of the downstream compartment about needles (8).

10. Spinneret according to Claim 9, characterised in that fluid passages (25) of intermediate plate (24) have an elongated rounded shape and each accommodate two needles.

## Patentansprüche

1. Spinndüse zur Herstellung von Membranen aus einem organischen Material mit mindestens einem Längskanal, dadurch gekennzeichnet, daß sie die folgenden Teile umfaßt :
- einen ringförmigen Körper (1) mit einem Hohlraum (2) zylindrischer Allgemeinform und mit mindestens einem Flüssigkeitskanal (5), der radial in den besagten Hohlraum mündet,
- ein oberes Paßstück (3) mit
. mindestens einem Abschnitt (3b), dem sogenannten oberen Abschnitt, dessen äußerer Querschnitt dem des Hohlraums (2) von Körper (1) entspricht und so beschaffen ist, daß er unter Druck in den besagten Hohlraum eingesetzt werden kann,
. mindestens einer Hohlnadel (8), die sich in der Verlängerung des besagten Paßstücks erstreckt,
. einem Längskanal (9) für die Zufuhr von Zentrierflüssigkeit, der durch das besagte Paßstück (3) hindurchführt und mit jeder Nadel (8) kommuniziert,
- ein unteres Paßstück (4) mit einem äußeren Querschnitt, der dem Hohlraum (2) von Körper (1) entspricht und so beschaffen ist, daß das besagte Paßstück unter Druck in den besagten Hohlraum eingesetzt werden kann, wobei das besagte untere Paßstück eine Bohrung (6) aufweist, die so beschaffen ist, daß sie rings um die Nadeln (8) eine Extrusionskammer (6b) abgrenzt, deren Querschnitt der der herzustellenden Membran entspricht,
- wobei das untere Paßstück (4) und das obere Paßstück (3) mit den gegenüber befindlichen Flächen (4a, 3a) aneinander anschließen,
- wobei jeder Flüssigkeitskanal (5) so in dem ringförmigen Körper (1) geformt ist, daß er in Höhe der einander gegenüber befindlichen Flächen (3a, 4a) des unteren Paßstücks (4) und des oberen Paßstücks (3) mündet,
- einen Flüssigkeitsdurchlaß (7 ; 23, 26a) der in den besagten gegenüber befindlichen Flächen geformt ist, und zwar mit jedem der Flüssigkeitskanäle (5) so fluchtend, daß er mit der Extrusionskammer (6b) kommuniziert,
- wobei jeder Flüssigkeitskanal (5) und der mit dem besagten Kanal fluchtende Flüssigkeitsdurchlaß (7 ; 23, 26a) so beschaffen sind, daß sie einen Flüssigkeitsdurchgang mit in der Fließrichtung der besagten Flüssigkeit abnehmendem Querschnitt abgrenzen.

2. Spinndüse nach Anspruch 1, dadurch gekennzeichnet, daß sie Mittel, und zwar insbesondere mindestens einen Stift (20) umfaßt, die so beschaffen sind, daß sie die Lage des unteren Paßstücks (4) und des oberen Paßstücks (3) im Verhältnis zur Innenseite des Hohlraums (2) des ringförmigen Körpers (1) indexieren.

3. Spinndüse nach einem der Ansprüche 1 oder 2, dadurch gekennzeichnet, daß sie die folgenden Teile umfaßt:
- ein oberes Paßstück (3) mit mindestens einer durchgehenden Längsbohrung (17), die in den Längskanal (9) für die Zufuhr von Zentrierflüssigkeit mündet,
- eine Nadel (8), die so in jeder Bohrung (17) angeordnet ist, daß sie einen Abschnitt, den sogenannten unteren Abschnitt, umfaßt, der sich teilweise in der Verlängerung des oberen Paßstücks (3) erstreckt, sowie ein gegenüber befindliches Ende, das sogenannte obere Ende, das in Kanal (9) für die Zufuhr von Zentrierflüssigkeit mündet, wobei das besagte obere Ende durch Löten oder Kleben fest in dem besagten Zufuhrkanal angebracht ist.

4. Spinndüse nach einem der Ansprüche 1 bis 3, dadurch gekennzeichnet, daß jede Nadel (8) in der Masse des oberen Paßstücks (3) geschnitten ist.

5. Spinndüse nach einem der vorstehenden Ansprüche, dadurch gekennzeichnet, daß Kanal (9) für die Zufuhr von Zentrierflüssigkeit des oberen Paßstücks (3) und jeder in dem ringförmigen Körper (1) geformte Flüssigkeitskanal (5) mit Gewinden versehene Enden für den Anschluß von Flüssigkeitszufuhrkanälen mit entsprechendem Gewindeende umfassen.

6. Spinndüse nach einem der vorstehenden Ansprüche, dadurch gekennzeichnet, daß jeder in den gegenüber befindlichen Flächen des unteren Paßstücks (4) und des oberen Paßstücks (3) geformte Flüssigkeitsdurchlaß durch eine mit einem Flüssigkeitskanal (5) des ringförmigen Körpers (1) fluchtende Nut (7) in der Fläche eines der besagten Paßstücke gebildet wird.

7. Spinndüse nach einem der vorstehenden Ansprüche mit mehreren Nadeln (8), die in Verlängerung des oberen Paßstücks (3) aneinandergereiht sind sowie einem unteren Paßstück (4) mit einer Bohrung (6b) von rechteckigem Querschnitt, die rings um die besagten Nadeln eine Extrusionskammer mit rechteckigem Querschnitt abgrenzt, deren Weite im Verhältnis zu ihrer Länge gering ist.

8. Spinndüse nach einem der Ansprüche 1 bis 6 mit mehreren Nadeln (8), die im Verhältnis zu der Längsachse der besagten Spinndüse konzentrisch angeordnet sind, und mit einem unteren Paßstück (4), das mit einer Bohrung (6b) von kreisförmigem Querschnitt versehen ist, die rings um die besagten Nadeln eine Extrusionskammer von zylindrischem Querschnitt abgrenzt.

9. Spinndüse nach Anspruch 8, dadurch gekennzeichnet, daß sie eine Zwischenplatte (24) in Bohrung (6) des unteren Paßstücks (4) umfaßt, und zwar so, daß diese die besagte Bohrung in zwei Kammern - eine stromaufwärts befindliche Kammer, in die jeder Flüssigkeitskanal (5) mündet, und eine stromabwärts gelegene Kammer (6b), die die Extrudatsaustrittskammer bildet - teilt, wobei die besagte Zwischenplatte mit einer Mehrzahl von Durchlässen (25) versehen ist, die so beschaffen sind, daß sie Durchlauf der Flüssigkeit in den interstitiellen Raum der stromabwärts gelegenen Kammer rings um die Nadeln (8) gestatten.

10. Spinndüse nach Anspruch 9, dadurch gekennzeichnet, daß die Flüssigkeitsdurchlässe (25) der Zwischenplatte (24) eine längliche gerundete Form aufweisen und je zwei Nadeln aufnehmen.
